# EUROPÄISCHE PATENTANMELDUNG

(11) **EP 1 642 634 A1**
(43) Veröffentlichungstag der Anmeldung: **05.04.2006**
(21) Anmeldenummer: 05450158.0
(22) Anmeldetag: 03.10.2005
(51) Int. Cl.: B01D 53/68, F23G 5/48, F23J 15/00

(54) **Verfahren zum Verhindern der Hochtemperatur-Chlorkorrosion in Verbrennungsanlagen**

(30) Priorität: 04.10.2004 AT 16482004
(71) Anmelder: ICA Chemie AG, 4132 Muttenz (CH)
(72) Erfinder: Birkner, Friedrich, Dr., 3384 Gross Sierning (AT); Birkner, Maria Katharina, Dr., 3384 Gross Sierning (AT)
(74) Vertreter: Haffner, Thomas M.

(57) **Zusammenfassung**

Bei einem Verfahren zum Verhindern der Hochtemperatur-Chlorkorrosion in Verbrennungsanlagen, insbesondere im Bereich von Dampfüberhitzern, bei welchem poröse, Hydroxylgruppen tragende Trägersubstanzen, wie z.B. Silanolgruppen tragende Silikate, in die Rauchgase eingedüst werden, werden die Hydroxylgruppen tragenden Träger mit Oxidationsmittel und/oder Verbrennungskatalysatoren, wie z.B. KMnO₄ und/oder Ce Nitraten und/oder NH₄(NO₃), beschichtet oder gemeinsam mit diesen als Lösung oder Suspension eingedüst.

## Beschreibung

Die Erfindung bezieht sich auf ein Verfahren zum Verhindern der Hochtemperatur-Chlorkorrosion in Verbrennungsanlagen, insbesondere im Bereich von Dampfüberhitzern, bei welchem poröse, Hydroxylgruppen tragende Trägersubstanzen, wie z.B. Silanolgruppen tragende Silikate, in die Rauchgase eingedüst werden.

In Müllverbrennungsanlagen sind in Strömungsrichtung nach der Brennkammer, und insbesondere im Abgasraum bis zum Überhitzer, Korrosionsschäden üblicher Weise auf eine Chlorkorrosion zurückzuführen. Derartige Schäden werden durch Metallchloride verursacht, die dampfförmig in das Rauchgas gelangen und an kälteren Teilen oder Abschnitten, wie beispielsweise Heizflächen der Kessel oder der Überhitzer, kondensieren.

Die EP 958 335 zeigt und beschreibt ein Verfahren zum Verhindern derartiger Hochtemperaturkorrosionen, bei welchem sauer aktivierter Bentonit in einen Gasraum bei Temperaturen über 750°C eingedüst wird. Sauer aktivierter Bentonit verfügt über Silanolgruppen, welche insbesondere bei hohen Temperaturen in der Lage sind aus Salzen die jeweiligen Metalle zu binden, wodurch geschmolzene Gläser entstehen, welche in die Schlacke abfließen können. Verbleibender trockener Chlorwasserstoff im Fall von Alkalichloriden führt nicht zu weiteren Korrosionen.

Neben derartig sauer aktiviertem Bentonit ist am Markt ein weiteres Produkt erhältlich, bei welchem Additive bestehend aus Kieselgelen in Form von Hydrogelen mit 20 bis 90 Gew.% Wasser eingesetzt werden, wobei hier der hohe Wassergehalt nach dem Eindüsen über eine hinreichend lange Zeit entsprechend kühlere Partikel im Gasraum bereit stellt, an welchen verdampfte Metallchloride wiederum kondensieren können. Wenn sauer aktivierter Bentonit in Zonen mit relativ geringen Temperaturen eingedüst wird, wird in einem ersten Schritt eine Kondensation von Metallchloriden an der Oberfläche der porösen Partikel zu beobachten sein.

Die chemische Umsetzung mit den Hydroxylgruppen erfolgt mit zunehmender Temperatur rascher, wobei insbesondere dann, wenn Partikel auf relativ niedrigerem Temperaturniveau im Gasraum vorherrschen, der Zeitraum bis zu einer erwünschten Umsetzung der Metallchloride mit den Hydroxylgruppen relativ lang sein kann, was wiederum zur Folge hat, dass unumgesetzte Metallchloride gemeinsam mit den Partikeln aus dem Gasraum wiederum ausgetragen werden können oder erneut korrosiv wirksam werden.

Die Erfindung zielt nun darauf ab, die gewünschte Umsetzung von Metallchloriden an Hydroxylgruppen von Trägersubstanzen, wie beispielsweise sauer aktiviertem Bentonit oder dgl., zu beschleunigen und auf diese Weise auch bei niedrigerem Temperaturniveau eine weitestgehend vollständige Umsetzung zu gewährleisten.

Zur Lösung dieser Aufgabe besteht das erfindungsgemäße Verfahren im Wesentlichen darin, dass die Hydroxylgruppen tragenden Träger mit Oxidationsmitteln und/oder Verbrennungskatalysatoren, wie z.B. KMnO₄ und/oder Ce Nitraten und/oder NH₄(NO₃), beschichtet oder gemeinsam mit diesen als Lösung oder Suspension eingedüst werden. Dadurch, dass nun die bisher vorgeschlagenen Hydroxylgruppen tragenden Träger, wie beispielsweise sauer aktivierter Bentonit oder andere Phylosilikate bzw. deren Hydrogele, mit Verbrennungskatalysatören gemeinsam eingebracht werden, wird die Möglichkeit geschaffen die gewünschte Umsetzung, nämlich die gewünschte Oxidation der Metallchloride an der Oberfläche der Hydroxylgruppen tragenden Träger, auch bei tieferen Temperaturen hinreichend rasch zu bewirken, sodass die Abbindung der Metalle in Form von Metallsilikaten, und damit in Form von inerten Gläsern, zuverlässig gelingt. Zu diesem Zweck können Oxidationsmittel, wie beispielsweise Amoniumnitrat, oder aber Verbrennungskatalysatoren, wie beispielsweise Kaliumpermanganat oder Ce-Nitrate, als Beschichtungsmittel eingesetzt werden. Alternativ kann anstelle einer derartigen Vorbehandlung der die Hydroxylgruppen tragenden Träger eine Suspension oder Lösung der gemeinsam einzudüsenden Substanzen gebildet werden und es können die die Hydroxylgruppen tragenden Träger gemeinsam mit dem Oxidationsmittel bzw. dem Verbrennungskatalysatoren eingedüst werden.

Mit Vorteil wird erfindungsgemäß so vorgegangen, dass Oxidationsmittel und/oder Verbrennungskatalysatoren in Mengen von 1-500 ppm, bezogen auf die Brennstoffmenge, eingesetzt werden, wobei in vorteilhafter Weise poröse, Hydroxylgruppen tragende Träger in Mengen von 0,05 bis 0,3 Gew. % , vorzugsweise 0,1 bis 3 Gew.%, bezogen auf Brennstoff, eingesetzt werden. Mit derartigen Mengen an Verbrennungskatalysatoren bzw. Oxidationsmitteln einerseits und porösen, Hydroxylgruppen tragenden Trägern lässt sich insbesondere im Bereich von Dampfüberhitzern noch eine zuverlässige Elimination von Metallchloriden und die gewünschte Umsetzung zum Verhindern der Hochtemperatur-Chlorkorrosion gewährleisten.

Besonders vorteilhaft wird hierbei so vorgegangen, dass OH-Gruppen tragende Träger und Oxidationsmittel und/oder Verbrennungskatalysatoren im Verhältnis 3·10⁵:1 bis 2:1 eingesetzt werden, wobei mit Rücksicht auf die durch die Oxidationsmittel bzw. Verbrennungskatalysatoren beschleunigte Reaktivität so vorgegangen werden kann, dass das Eindüsen in Bereiche mit Rauchgastemperaturen von < 800°C vorgenommen wird.

Insgesamt wird durch das erfindungsgemäße Verfahren sichergestellt, dass Metallchloride zunächst sicher an Silanolgruppen absorbiert werden und in der Folge auch zu den entsprechenden Metallsalzen umgesetzt werden, wobei die Reaktion im Rauchgas und nicht in den Belegen stattfindet. Die gebildeten Metallsilikate stellen geschmolzene Gläser dar, die die Ausmauerung mit einer inerten Schutzschicht überziehen können und feste und flüssige Rauchgasbestandteile in die Schlacke austragen können. Chlorwasserstoff, und insbesondere trockener Chlorwasserstoff, greift im Gegensatz zu elementarem Chlor die Zunderschicht der Rohre nicht an, sodass keine Chlorkorrosion auftritt.

## Patentansprüche

1. Verfahren zum Verhindern der Hochtemperatur-Chlorkorrosion in Verbrennungsanlagen, insbesondere im Bereich von Dampfüberhitzern, bei welchem poröse, Hydroxylgruppen tragende Trägersubstanzen, wie z.B. Silanolgruppen tragende Silikate, in die Rauchgase eingedüst werden, **dadurch gekennzeichnet, dass** die Hydroxylgruppen tragenden Träger mit Oxidationsmitteln und/oder Verbrennungskatalysatoren, wie z.B. KMnO₄ und/oder Ce Nitraten und/oder NH₄(NO₃), beschichtet oder gemeinsam mit diesen als Lösung oder Suspension eingedüst werden.

2. Verfahren nach Anspruch 1, **dadurch gekennzeichnet, dass** Oxidationsmittel und/oder Verbrennungskatalysatoren in Mengen von 1 - 500 ppm, bezogen auf die Brennstoffmenge, eingesetzt werden.

3. Verfahren nach Anspruch 1 oder 2, **dadurch gekennzeichnet, dass** poröse, Hydroxylgruppen tragende Träger in Mengen von 0,05 bis 3 Gew.%, vorzugsweise 1 bis 3 Gew.%, bezogen auf Brennstoff, eingesetzt werden.

4. Verfahren nach Anspruch 1,2 oder 3, **dadurch gekennzeichnet, dass** OH-Gruppen tragende Träger und Oxidationsmittel und/oder Verbrennungskatalysatoren im Verhältnis 3·10⁵:1 bis 2:1 eingesetzt werden.

5. Verfahren nach einem der Ansprüche 1 bis 4, **dadurch gekennzeichnet, dass** das Eindüsen in Bereiche mit Rauchgastemperaturen von < 800°C vorgenommen wird.
